(19) Europäisches Patentamt
European Patent Office
Office européen des brevets

(11) **EP 2 042 908 A2**

## (12) EUROPEAN PATENT APPLICATION

(43) Date of publication:
**01.04.2009 Bulletin 2009/14**

(51) Int Cl.:
***G02B 23/24*** *(2006.01)*

(21) Application number: **08016015.3**

(22) Date of filing: **11.09.2008**

| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS**<br><br>(30) Priority: **27.09.2007 JP 2007251111** | (71) Applicant: **Fujinon Corporation**<br>**Saitama-shi,**<br>**Saitama (JP)**<br><br>(72) Inventor: **Miyano, Hitoshi**<br>**Saitama-shi,**<br>**Saitama (JP)**<br><br>(74) Representative: **Klunker . Schmitt-Nilson . Hirsch**<br>**Destouchesstrasse 68**<br>**80796 München (DE)** |
|---|---|

### (54) Imaging optical system and endoscope imaging apparatus

(57) An imaging optical system disposed in a front end portion of an insertion section of an endoscope is provided and satisfies:

$$-1.5 \leq \frac{(Tf + Sf)/2 - Zf}{(Tn + Sn)/2 - Zn} \leq 0.0 \qquad (1)$$

where, Zf is a spherical aberration of a ray transmitted through 70% of a pupil diameter, and Sf and Tf are field curvatures in a sagittal direction and a tangential direction, respectively, at 80% of a maximum image height, at the imaging position at a time when an object is disposed at the far point; and Zn is a spherical aberration of a ray transmitted through 70% of a pupil diameter at the imaging position, and Sn and Tn are field curvatures in a sagittal direction and a tangential direction, respectively, at 80% of the maximum image height, at the imaging position at the time when the object is disposed at the near point.

## FIG. 1

EP 2 042 908 A2

**Description**

This application is based on and claims priority under 35 U.S.C §119 from Japanese Patent Application No. 2007-251111, filed on September 27, 2007, the entire disclosure of which is herein incorporated by reference.

BACKGROUND OF THE INVENTION

1. Field of the Invention

The present invention relates to an imaging optical system and an endoscope imaging apparatus, and more particularly to an imaging optical system disposed in a front end portion of an insertion section of an endoscope and an endoscope imaging apparatus having the imaging optical system and an imaging device converting an image formed by the imaging optical system into an electric signal for displaying the image on a display device.

2. Description of Related Art

Generally, to observe an inside of a patient's body and perform a treatment in medical field and the like, endoscopes have been used. In a front end portion of an insertion section of such an endoscope, an imaging optical system such as an objective lens for taking an image in a body cavity is disposed. In recent years, as surgery under such an endoscope has spread, generally, an image formed by the imaging optical system is displayed on a display device such as a television monitor, and an operator observes the image displayed on a screen of the display device. Hence, in order for the operator to easily observe the image, it is preferred that the image should have a small field curvature, and thus there has been proposed an endoscope objective lens for well correcting field curvature.

Meanwhile, observation targets in a body cavity mostly have a protrusion shape and a tubulous shape, but it is preferred to obtain a fine image even from such observation targets. In JP-A-2001-194580 or US 6,400,514, there is disclosed an endoscope objective lens that includes three lens groups and can generate field curvature so as to make image quality of the peripheral portion of the screen better, in accordance with an observation target, while magnification keeps at a substantially constant level, by moving at least one lens group.

However, when an object distance and an imaging position corresponding thereto are set, the general optical system for well correcting field curvature has been designed to match a fine image position on the center of a screen with a fine image position on the peripheral portion of the screen by correcting the amount of field curvature. In such a design, change of field curvature caused by change of an object distance has been not considered. Practically, as the object distance changes, field curvature also changes. Thus, although field curvature is well corrected at the imaging position preset at the time of design, the best image positions may be different between the screen center and the screen periphery when the object exists at a position unallowable in the design. Consequently, in the general optical system for correcting field curvature, there has been concern that extreme deterioration is caused in the screen periphery by change of the object distance.

In addition, most of imaging apparatuses such as a camera mostly have a focus adjustment mechanism for adjusting change of the imaging position caused by change of the object distance, but most of endoscope imaging apparatuses does not have such a focus adjustment mechanism. In a case where the focus adjustment mechanism is disposed in the endoscope imaging apparatus, the configuration thereof becomes complicated and space for the focus adjustment mechanism is needed, and thus there is concern about an increase in aperture of the front end portion of the endoscope imaging apparatus.

SUMMARY OF THE INVENTION

An object of an illustrative, non-limiting embodiment of the invention is to provide an imaging optical system for endoscope capable of obtaining a fine image without extreme deterioration even when an object distance changes in a state where a focus adjustment mechanism is not employed, and an endoscope imaging apparatus having the imaging optical system.

According to an aspect of the invention, an imaging optical system is disposed in a front end portion of an insertion section of an endoscope. In the imaging optical system, a position on which light from an object distance is focused by the imaging optical system is defined as an imaging position and the farthest limit and the nearest limit of depth of field in the imaging optical system are defined as a far point and a near point, respectively. In this case, at the imaging position at the time when the object is disposed at the far point, it is assumed that an amount of a spherical aberration of a ray transmitted through 70% of a pupil diameter is Zf, an amount of a field curvature in the sagittel direction at 80% of the maximum image height is Sf, and an amount of a field curvature in the tangential direction at 80% of the maximum image height is Tf. In addition, at the imaging position at the time when the object is disposed at the near point, it is also assumed that an amount of a spherical aberration caused of a ray transmitted through 70% of a pupil diameter is Zn, an amount of a field curvature in the sagittal direction at 80% of the maximum image height is Sn, and an amount of a field curvature in the tangential direction at 80% of the maximum image height is Tn. Then, the following conditional expression (1) is satisfied.

$$-1.5 \le \frac{(Tf + Sf)/2 - Zf}{(Tn + Sn)/2 - Zn} \le 0.0 \qquad (1)$$

The imaging optical system may not include a focus adjustment mechanism for focusing responsive to change of the object distance.

In addition, according to another aspect of the invention, an endoscope imaging apparatus includes: the imaging optical system according to an aspect of the invention; and an imaging device converting an image formed by the imaging optical system into an electric signal for displaying the image on a display device. In the endoscope imaging apparatus, the least circle of confusion diameter $\delta$ at the time when an image on the display device is observed is in the range of $2V/240 \le \delta \le 2V/160$, where V is a size at the imaging position of an image displayed in a vertical direction on the display device. In addition, a depth of focus d on an image side of the imaging optical system is defined as $d = \delta \times Fe$ by the least circle of confusion diameter $\delta$ and an effective F number Fe. In this case, the far point is a conjugate point of a point separated at a distance of the depth of focus d from the imaging position toward the imaging optical system. On the other hand, the near point is a conjugate point of a point separated at a distance of the depth of focus d from the imaging position toward the opposite side to the imaging optical system.

BRIEF DESCRIPTION OF THE DRAWINGS

The features of the invention will appear more fully upon consideration of the exemplary example of the invention, which are schematically set forth in the drawings, in which:

Fig. 1 is an explanatory diagram showing a concept of an exemplary embodiment of the invention;
Fig. 2 is an exemplary aberration diagram of an imaging optical system of an endoscope;
Fig. 3 is an explanatory diagram showing observation at a near point;
Fig. 4 is a schematic configuration diagram showing an endoscope system according to an exemplary embodiment of the invention;
Fig. 5 is a schematic sectional diagram showing a front end portion of an insertion section of the endoscope;
Fig. 6 is a lens configuration diagram of an imaging optical system according to Example 1;
Fig. 7 is a lens configuration diagram of an imaging optical system according to Example 2;
Fig. 8 is a lens configuration diagram of an imaging optical system according to Example 3;
Fig. 9 is a lens configuration diagram of an imaging optical system according to Example 4;
Fig. 10 is a lens configuration diagram of an imaging optical system according to Example 5;
Fig. 11 is a lens configuration diagram of an imaging optical system according to Example 6;
Fig. 12 is a lens configuration diagram of an imaging optical system according to Example 7;
Fig. 13 is a diagram showing aberrations of the imaging optical system according to Example 1;
Fig. 14 is a diagram showing aberrations of the imaging optical system according to Example 2;
Fig. 15 is a diagram showing aberrations of the imaging optical system according to Example 3;
Fig. 16 is a diagram showing aberrations of the imaging optical system according to Example 4;
Fig. 17 is a diagram showing aberrations of the imaging optical system according to Example 5;
Fig. 18 is a diagram showing aberrations of the imaging optical system according to Example 6; and
Fig. 19 is a diagram showing aberrations of the imaging optical system according to Example 7.

DETAILED DESCRIPTION OF THE EXEMPLARY EMBODIMENTS

In this specification, depth of field is defined as a range of distance in which the object is clearly visible when focusing is performed on the object at a position, that is, a range of distance in which the object image is acceptably sharp. In the invention, depth of field is assumed as a range of observable distance.

In addition, each of the terms (Tf + Sf)/2 and (Tn + Sn)/2 in the conditional expression (1) means a mean value of the field curvature in the tangential direction and the field curvature in the sagittal direction. Here, to make good image balance in the screen center and the screen periphery, the amount of the field curvature at 80% image height is taken.

In addition, spherical aberration of an imaging optical system of an endoscope tends to monotonically increase on the under side or the over side in accordance with an increase in aperture. Since the fine image position is based on rays transmitted through about 70% of the pupil diameter (zonal), as a representative value, the amount of the zonal spherical aberration is taken.

An imaging optical system according to an exemplary embodiment of the invention is configured to prevent extreme deterioration of the image of the object on the near point side and the far point side in the range of the observable distance, without using a focus adjustment mechanism, by properly adjusting change of field curvature in the range of the observable distance.

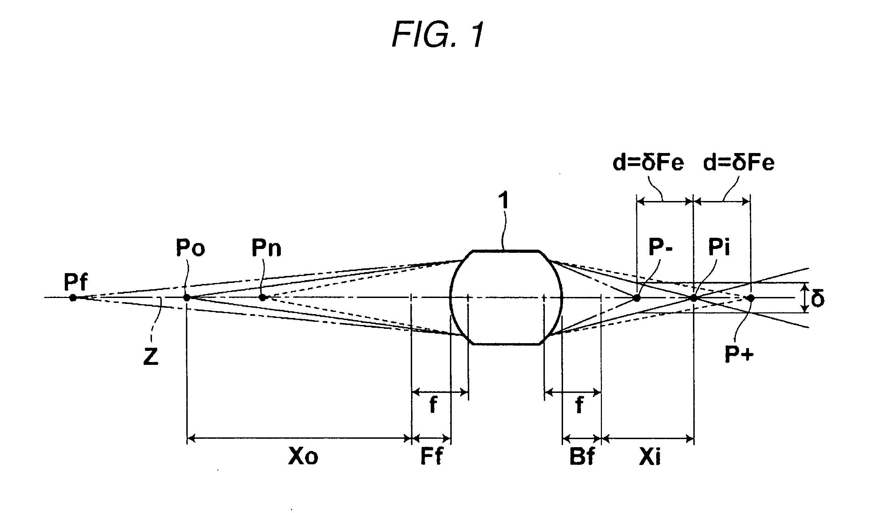

Referring to Figs. 1 to 3, a concept of the invention will be described. First, referring to Fig. 1, a method of obtaining depth of field will be described. An imaging optical system 1 is schematically illustrated in Fig. 1. As shown in Fig. 1, an object distance Po is set on an optical axis Z, and a position on which light (illustrated by a solid line) from the object distance Po is focused by the imaging optical system 1 is defined as an imaging position Pi.

Light from the object distance Po is mostly concentrated on one point at the imaging position Pi, but as distanced from the imaging position Pi, the cone of the light flux increases and its image blurs. In this case, the limit of image that is acceptably sharp in a cone of the ray is defined as a least circle of confusion diameter $\delta$. A range from the imaging position Pi to a point (P+ or P- in Fig. 1) where the cone of the ray reaches the least circle of confusion diameter $\delta$ is defined as a depth of focus d on the image side. Here, the point Pis defined as a point separated at a distance of the depth of focus d from the imaging position Pi toward the imaging optical system 1, and the point P+ is defined as a point separated at a distance of the depth of focus d from the imaging position Pi toward the opposite side to the imaging optical system 1. In addition, the depth of focus d is defined as $d = \delta \times Fe$ by the least circle of confusion diameter $\delta$ and an effective F number Fe when the light from the object distance Po is focused on the imaging position Pi.

Since the range within the depth of focus is a range of the image that is acceptably sharp in image space, a range of an object side space conjugate to the range from the point P-to the point P+ is defined as a depth of field. As shown in Fig. 1, a conjugate point that is optically conjugate to the point P- is defined as a point Pf, and a conjugate point that is optically conjugate to the point P+ is defined as a point Pn. Accordingly, the range from the point Pf to the point Pn is defined as the depth of field, the point Pf is defined as a far point which is the farthest limit, and the point Pn is defined as a near point which is the nearest limit.

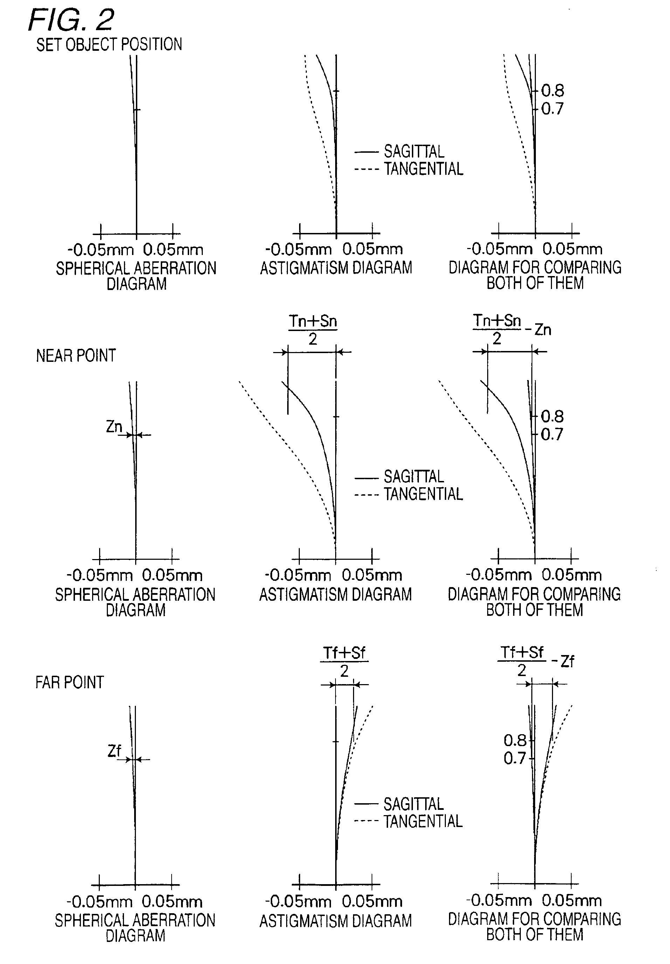

Next, field curvature at the imaging position Pi at the time when the object is disposed at the far point or near point will be described. Fig. 2 shows aberration diagrams in an embodiment of an endoscope imaging optical system. In the upper part of Fig. 2, there is illustrated, in order from the left side of the drawing, spherical aberration diagram at the imaging position Pi when the object is disposed at the preset object distance Po, astigmatism (field curvature in the sagittal direction and field curvature in the tangential direction) diagram, and a diagram for superposing both of them (the spherical aberration diagram and the astigmatism diagram) normalized by the maximum value of the vertical axis.

Similarly, in the middle part of Fig. 2, there is illustrated, in order from the left side of the drawing, spherical aberration diagram and astigmatism diagram at the imaging position Pi when the object is disposed at the near point, and a diagram for superposing both of them normalized by the maximum value of the vertical axis. In addition, in the lower part of Fig. 2, there is illustrated, in order from the left side of the drawing, spherical aberration diagram and astigmatism diagram at the imaging position Pi when the object is disposed at the far point, and a diagram for superposing both of them normalized by the maximum value of the vertical axis. In the diagram for superposing both of them shown in Fig. 2, the reference numerals 0.7 and 0.8 are noted on positions corresponding to 70% and 80% of the maximum value on the vertical axis.

Generally, in an endoscope objective lens, even if field curvature and astigmatism is well corrected with respect to the object distance previously set at the time of design, there is a tendency that the image plane becomes under on the near point side and becomes over on the far point side in accordance with change of the object distance in the range of the observable distance, while change of spherical aberration is small, as shown in Fig. 2

Accordingly, an exemplary embodiment of the invention is configured so that the aforementioned terms including the amount of the spherical aberration and the amount of the field curvature at each of the near point and the far point satisfy the conditional expression (1). Thus, the change of image plane in the range of the observable distance is appropriately distributed, and the amounts of change in the image plane in observation on the near point side and the far point side are made to be substantially the same, whereby extreme deterioration in the image is suppressed even when the object distance changes. In addition, when the amounts of change of the image plane are distributed to be the same on the near point side and far point side, the resultant value of the conditional expression (1) becomes equal to -1, but the allowable limit thereof may be about -1.5.

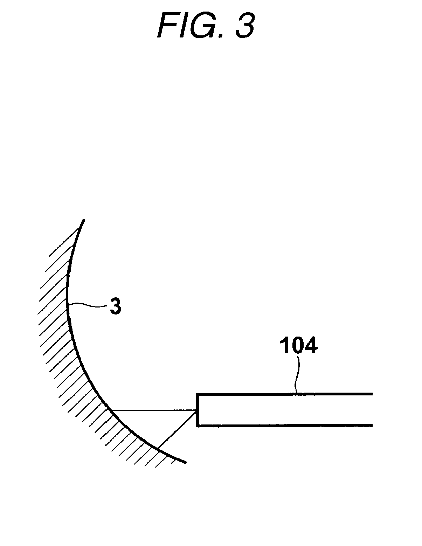

Besides, considering usage situation of the endoscope, in observation on the near point side, it is considered that a front end of an insertion section 104 of the endoscope diagonally faces to the inner wall 3 of the interior of the body as shown in Fig. 3. Accordingly, an allowable range of the image plane that becomes under increases when the object is disposed on the near point side. Thus, 0.0 is set as the upper limit so that the image plane does not become over the far point side.

In addition, the least circle of confusion diameter δ used as described above means the limit of the image blur that is acceptably sharp. However, in an exemplary embodiment of the invention, the range is determined in accordance with the following concept. It can be said, resolution of human eyes is about 1' in angle of sight, and thus the limit of resolution in sharpness can be defined as about 4' which is four times thereof. In addition, in the recent endoscope, generally, observation about an image is performed not by directly looking the image but by looking the image displayed on a display device such as a television monitor. Therefore, it is premised that the image is observed by such a display device.

When a user observes the image at a distance of 1.5 m from the display device, the maximum permissible blur $\delta_d$ on the display screen in sharpness is expressed by

$$\delta_d = 1500 \text{ mm} \times \tan(4/60) \cong 1.75 \text{ mm.}$$

From the display device widely used at the present time, a vertical size of the display region is set by about 210 mm. In this case, a value of permissible blur $\delta_d$ on the display screen is equal to about 0.0083 ($\cong$ 1.75/210) of the vertical size of the display region.

From the permissible blur $\delta_d$ on the display screen, the permissible blur on the image plane at the imaging position Pi of the imaging optical system 1, that is, the least circle of confusion diameter δ is determined. Assuming that a size at the imaging position Pi of the image displayed in the vertical direction on the display device is V, the least circle of confusion diameter δ is expressed by

$$\delta = V \times (1.75/210) \cong V \times 0.0083.$$

In addition, since 210÷1.75 = 120 is satisfied, the least circle of confusion diameter δ is represented by the following expression.

$$\delta = V/120$$

Specifically, resolution of the imaging optical system at this time is 60 lp/mm, that is, 120 TV lines in resolution of display devices such as a television monitor. Here, since a frequency of 1 MHz in a video signal is equal to 80 TV lines, considering a unit of 1 MHz, the least circle of confusion diameter δ is expressed by

$$\delta = (2 \times V)/240,$$

and thus is equal to 2V divided by 3 MHz (240 TV lines).

In practical usage, it should be considered that observation is performed at a farther distance from the display device. In this case, a value of the permissible blur $\delta_d$ on the display screen increases more than the value mentioned above. Accordingly, in a case where observation is performed at a farther distance, 3 MHz is set to be lowered to 2 MHz, and 2V is divided by 2 MHz (160 TV lines), whereby the least circle of confusion diameter δ is represented by the following expression.

$$\delta = (2 \times V)/160 = V \times 0.0125$$

As described above, considering practical usage situation of the endoscope, the amount of change of the image plane at the time when the least circle of confusion diameter δ is in the range of $2V/240 \le \delta \le 2V/160$ should be considered.

In addition, in the description mentioned above, a display device such as a television monitor was assumed from the usage situation of the general endoscope, and the case where observation is performed at a distance of about 1.5 m or more from the display device was exemplarily described. Depending on kinds of the display devices and observation situation, values of depth of field are different. However, according to the aforementioned concept of the invention, it is possible to calculate the near point and the far point in accordance with each case. In addition, even when the object distance changes in the range of the observable distance, it is possible to obtain a fine image without extreme deterioration.

According to an exemplary embodiment of an imaging optical system of the invention, when the object is disposed at the far point and the near point of depth of field, the conditional expression (1) is satisfied. Thus, the change of image plane in the range of the observable distance can be appropriately distributed, and the amounts of change in the image plane in observation on the near point side and the far point side can be made to be substantially the same. Accordingly, it is possible to obtain a fine image without extreme deterioration even when an object distance changes in the range of the observable distance in a state where a focus adjustment mechanism for focusing responsive to change of the object distance is not employed.

In addition, an endoscope imaging apparatus according to an exemplary embodiment of the invention has the imaging optical system. In the apparatus, considering the case where the image is observed by a general display device such as a monitor, the range of the least circle of confusion diameter is determined. Thus, even when the object distance changes, it is possible to observe a fine image without extreme deterioration in the image.

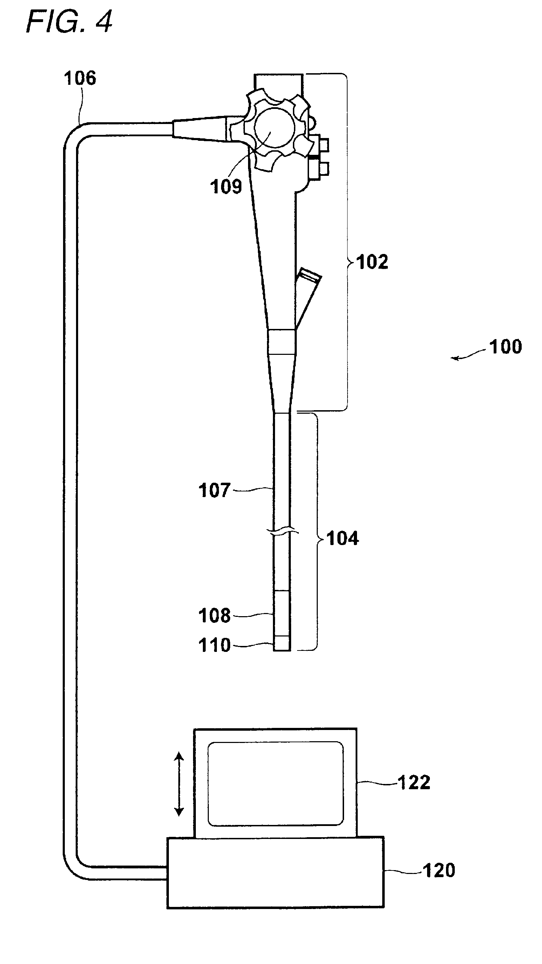

Hereinafter, exemplary embodiments of the invention will be described in detail with reference to the drawings. Fig. 4 is a schematic configuration diagram showing an exemplary embodiment of an endoscope system to which the imaging optical system and the imaging apparatus according to an exemplary embodiment of the invention is applicable.

The endoscope system shown in Fig. 4 includes an endoscope 100, a processor 120 that is connected to the endoscope 100 and performs various processes such as light source control or image process, and a display device 122 that displays an image taken by the imaging optical system 2 of the endoscope 100.

The endoscope 100 mostly has an operating section 102, an insertion section 104 that is connected to the front end side of the operating section 102, and a universal code 106 that is extracted from the rear end side of the operating section 102 and is connected to the processor 120.

The insertion section 104 is operative to be inserted into a patient's body, and a great part thereof is formed as an elastic portion 107. To the front end of the elastic portion 107, a bending portion 108 is connected, and to the front end of the bending portion 108, a front end portion 110 is sequentially connected. In the front end portion 110, the imaging optical system 2 is disposed as described later. The bending portion 108 is provided to make the front end portion 110 face in a desirable direction, and thus is configured to be able to perform a bending operation by turning the bending scan knob 109 provided on the operating section 102.

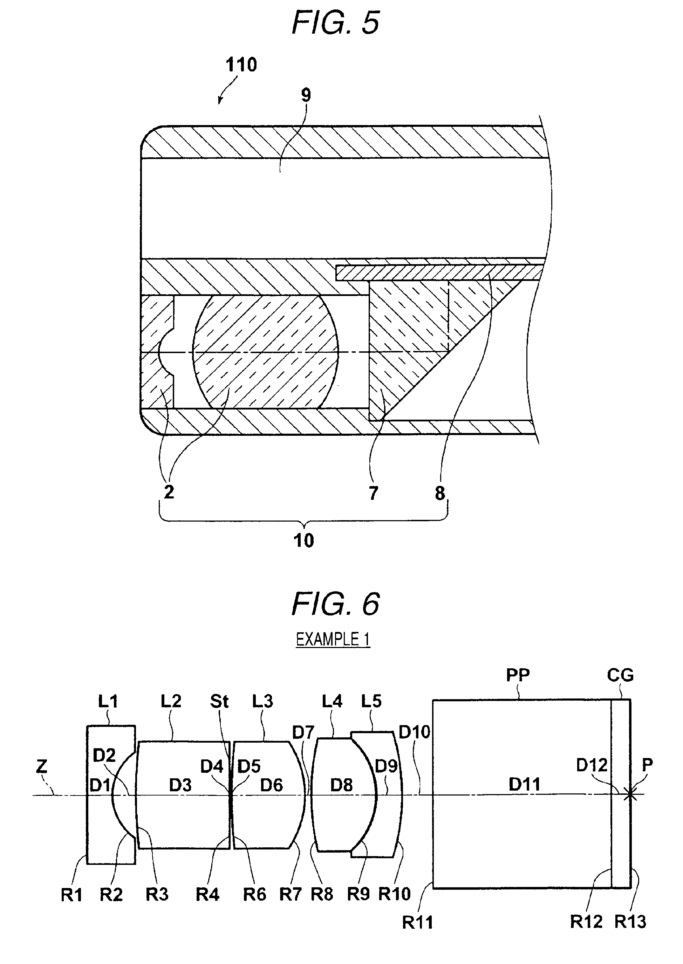

Next, a schematic configuration of the front end portion 110 in which the imaging optical system 2 according to the embodiment is disposed will be described with reference to Fig. 5. Fig. 5 is a sectional diagram showing a principal part of the front end portion 110 including an optical axis of the imaging optical system 2.

As shown in Fig. 5, in the front end portion 110, there are provided an imaging optical system 2 of which the optical axis is disposed parallel to a lengthwise direction of the insertion section 104, an optical path changing prism 7 that is operative to bend an optical path on the image side of the imaging optical system 2 by 90 degrees, and an imaging device 8 that is bonded to the optical path changing prism 7 so that a light receiving surface thereof is parallel to the lengthwise direction of the insertion section 104. In the embodiment, the imaging optical system 2, the optical path changing prism 7, and the imaging device 8 constitute the imaging apparatus 10, but the optical path changing prism 7 is not an essential element in the invention.

The imaging device 8 is operative to convert an image formed by the imaging optical system 2 into an electric signal for being displayed on the display device 122. As the imaging device 8, a solid-state imaging device such as a CCD (Charge Coupled Device) or a CMOS (Complementary Metal Oxide Semiconductor) can be employed.

In the lower half part of the front end portion 110 shown in Fig. 5, a direct view optical system is formed by the imaging device 8 disposed therein as shown in Fig. 5. In addition, in the upper half part of the front end portion 110 shown in Fig. 5, a treatment tool insertion channel 9 is formed, and enables disposition of a plurality of elements in the thin insertion section.

In addition, the imaging device 8 has a cover glass for protecting the light receiving surface, but the cover glass included in the imaging device 8 is not shown in Fig. 5. In addition, the imaging optical system 2 in Fig. 5 does not exactly represent a lens shape, and is schematically illustrated. In Fig. 5, the optical axis of the optical path form the imaging optical system 2 to the imaging device 8 is represented by a chain line.

The imaging optical system 2 according to the embodiment does not have a focus adjustment mechanism for focusing on the changed object distance, and lens groups thereof remain stationary.

In addition, in the imaging optical system 2, a position on which light from an object distance is focused by the imaging optical system 2 is defined as an imaging position and the farthest limit and the nearest limit of depth of field in the imaging optical system 2 are defined as a far point and a near point, respectively. In this case, at the imaging position at the time when the object is disposed at the far point, it is assumed that an amount of the spherical aberration of a ray transmitted through 70% of a pupil diameter is Zf, an amount of the field curvature in the sagittal direction at 80% of the maximum image height is Sf, and an amount of the field curvature in tangential direction at 80% of the maximum image height is Tf. In addition, at the imaging position at the time when the object is disposed at the near point, it is also assumed that an amount of the spherical aberration of a ray transmitted through 70% of a pupil diameter is Zn, an amount of the field curvature in the sagittal direction at 80% of the maximum image height is Sn, and an amount of the field curvature in the tangential direction at 80% of the maximum image height is Tn. Then, the following conditional expression (1) is satisfied.

$$-1.5 \leq \frac{(Tf + Sf)/2 - Zf}{(Tn + Sn)/2 - Zn} \leq 0.0 \qquad (1)$$

In this case, the far point of depth of field is defined as a conjugate point of a point separated at a distance of the depth of focus d from the imaging position toward the imaging optical system 2. On the other hand, the near point of depth of field is defined as a conjugate point of a point separated at a distance of the depth of focus d from the imaging position toward the opposite side of the imaging optical system 2. The depth of focus d is defined as d = $\delta \times$Fe by the least circle of confusion diameter $\delta$ at the time when the image is observed by using the display device 122 and an effective F number Fe at the time when the object distance and the imaging position are determined.

It is assumed that the least circle of confusion diameter $\delta$ is in the range of 2V/240 $\leq \delta \leq$ 2V/160, where V is a size at the imaging position of an image displayed in the vertical direction (an arrow direction in Fig. 4) on the display device 122. The reason why the aforementioned range is defined is described in the section of means for solving the problems.

In addition, since a display region of a general display device is horizontally long, for example, in a case where an imaging region has a rectangular shape and a horizontal size thereof and a vertical size thereof are different, the size corresponding to the shorter one is set as V. Alternatively, in a case where the imaging region has a circular shape, a diameter thereof is set as V.

Due to the configuration as described above, in the imaging optical system and endoscope imaging apparatus according to the embodiment, even when the focus adjustment mechanism for focusing responsive to change of the object distance is not employed, the amounts of change in the image plane in observation on the near point side and the far point side can be made to be substantially the same. Thus, it is possible to obtain a fine image without extreme deterioration even when an object distance changes in the range of the observable distance.

Examples

Hereinafter, numerical examples of the imaging optical system according to the invention will be described in detail.

<Example 1>

Table 1 shows lens data of the imaging optical system according to Example 1, and Fig. 6 is a lens configuration diagram thereof. In Fig. 6, the reference signs Ri and Di (i = 1, 2, 3 ...) correspond to the Ri and the Di in Table 1. The imaging optical system according to Example 1 is configured to have five lenses L1 to L5 in four groups. In addition, in the lens data in Table 1 and the configuration diagram in Fig. 6, there are also shown an aperture diaphragm St and optical members PP and CG having a plane parallel plate shape such as a filter, a prism, and a cover glass disposed between the lens system and the imaging point P. In addition, the aperture diaphragm St shown in Fig. 6 does not illustrate a shape and a size thereof, but illustrates a position thereof on the optical axis Z. In addition, the illustration of the aperture diaphragm St and the optical members having a plane parallel plate shape is similarly applied to examples to be described later.

In the lens data of Table 1, a surface number represents the sequential number of i-th (i = 1, 2, 3 ⋯) surface that sequentially increases as it gets closer to the image side when a surface of a component closest to the object side is defined as a first surface. In Table 1, Ri represents a radius of curvature of i-th (i = 1, 2, 3 ⋯) surface, and Di represents an on-axis surface spacing on the optical axis Z between the i-th (i = 1, 2, 3 ⋯) surface and the (i+1)th surface on the optical. In addition, Ndj represents a refractive index at the d-line (a wavelength of 587.6 nm) in a j-th (j = 1, 2, 3 ⋯) optical element of which the sequential number sequentially increases as it gets closer to the image side when a surface of the optical element closest to the object side is defined as a first surface. In addition, vdj represents an Abbe number of the j-th optical element at the d-line. In Table 1, units of the radius of curvature and the on-axis surface spacing are mm. In addition, a direction in which the radius of curvature is convex toward the object side is defined as a positive direction, and a direction in which the radius of curvature is convex toward the image side is defined as a negative direction. In addition, the reference signs in Table 1 have the same meaning as the reference signs in examples to be described later.

Table 1

| Example 1 | | | | |
|---|---|---|---|---|
| SURFACE NUMBER | Ri | Di | Ndj | νdj |
| 1 | ∞ | 0.400 | 1.88300 | 40.8 |
| 2 | 0.832 | 0.370 | | |
| 3 | 7.468 | 1.460 | 1.84666 | 23.8 |
| 4 | ∞ | 0.000 | | |
| 5 (APERTURE DIAPHRAGM) | ∞ | 0.035 | | |
| 6 | 8.414 | 1.150 | 1.62041 | 60.3 |
| 7 | -1.538 | 0.100 | | |
| 8 | 4.003 | 1.030 | 1.62041 | 60.3 |
| 9 | -1.212 | 0.400 | 1.84666 | 23.8 |
| 10 | -3.581 | 0.530 | | |
| 11 | ∞ | 2.800 | 1.55920 | 53.9 |
| 12 | ∞ | 0.300 | 1.51633 | 64.1 |
| 13 (IMAGE PLANE) | ∞ | | | |

<Example 2>

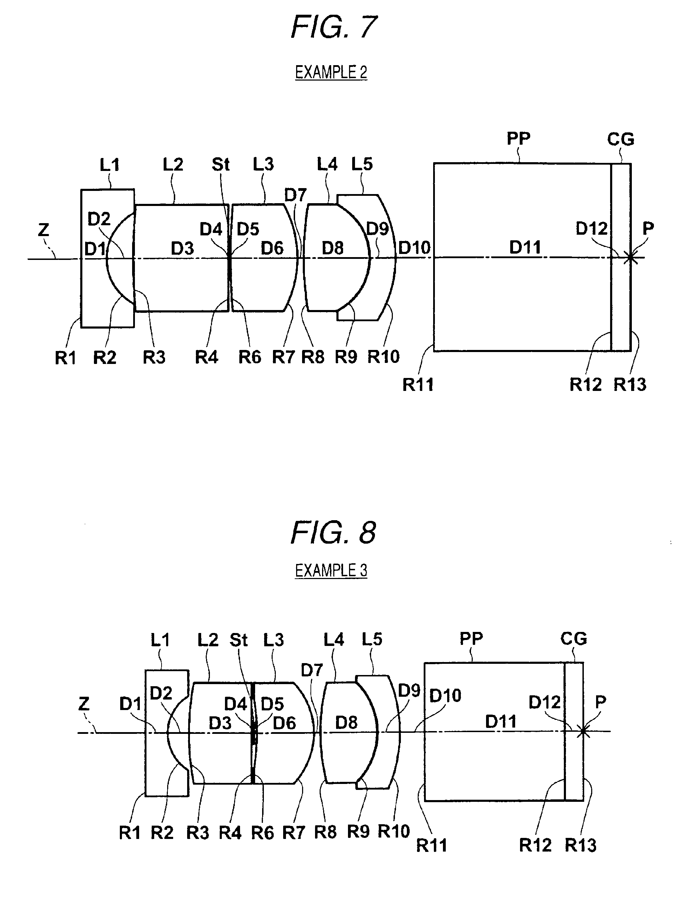

Table 2 shows lens data of the imaging optical system according to Example 2, and Fig. 7 is a lens configuration diagram thereof. In Fig. 7, the reference signs Ri and Di (i = 1, 2, 3 ...) correspond to the Ri and the Di in Table 2. The imaging optical system according to Example 2 is configured to have five lenses L1 to L5 in four groups. In addition, in the lens data in Table 2 and the configuration diagram in Fig. 7, there are also shown an aperture diaphragm St and optical members PP and CG having a plane parallel plate shape such as a filter, a prism, and a cover glass disposed between the lens system and the imaging point P.

Table 2

| Example 2 | | | | |
|---|---|---|---|---|
| SURFACE NUMBER | Ri | Di | Ndj | νdj |
| 1 | ∞ | 0.400 | 1.88300 | 40.8 |
| 2 | 0.832 | 0.420 | | |
| 3 | 10.216 | 1.490 | 1.84666 | 23.8 |
| 4 | ∞ | 0.000 | | |
| 5 (APERTURE DIAPHRAGM) | ∞ | 0.035 | | |
| 6 | 10.589 | 1.050 | 1.62041 | 60.3 |
| 7 | -1.818 | 0.100 | | |
| 8 | 5.437 | 1.050 | 1.62041 | 60.3 |
| 9 | -0.953 | 0.400 | 1.84666 | 23.8 |
| 10 | -1.901 | 0.570 | | |
| 11 | ∞ | 2.800 | 1.55920 | 53.9 |
| 12 | ∞ | 0.300 | 1.51633 | 64.1 |

(continued)

| Example 2 | | | | |
|---|---|---|---|---|
| SURFACE NUMBER | Ri | Di | Ndj | νdj |
| 13 (IMAGE PLANE) | ∞ | | | |

<Example 3>

Table 3 shows lens data of the imaging optical system according to Example 3, and Fig. 8 is a lens configuration diagram thereof. In Fig. 8, the reference signs Ri and Di (i = 1, 2, 3 ···) correspond to the Ri and the Di in Table 3. The imaging optical system according to Example 3 is configured to have five lenses L1 to L5 in four groups. In addition, in the lens data in Table 3 and the configuration diagram in Fig. 8, there are also shown an aperture diaphragm St and optical members PP and CG having a plane parallel plate shape such as a filter, a prism, and a cover glass disposed between the lens system and the imaging point P.

Table 3

| Example 3 | | | | |
|---|---|---|---|---|
| SURFACE NUMBER | Ri | Di | Ndj | νdj |
| 1 | ∞ | 0.350 | 1.88300 | 40.8 |
| 2 | 0.703 | 0.331 | | |
| 3 | 4.165 | 0.980 | 1.92286 | 18.9 |
| 4 | ∞ | 0.000 | | |
| 5 (APERTURE DIAPHRAGM) | ∞ | 0.085 | | |
| 6 | -3.647 | 0.890 | 1.71300 | 53.9 |
| 7 | -1.175 | 0.100 | | |
| 8 | 3.191 | 0.910 | 1.62041 | 60.3 |
| 9 | -1.125 | 0.350 | 1.92286 | 18.9 |
| 10 | -2.277 | 0.372 | | |
| 11 | ∞ | 2.200 | 1.55920 | 53.9 |
| 12 | ∞ | 0.300 | 1.51633 | 64.1 |
| 13 (IMAGE PLANE) | ∞ | | | |

<Example 4>

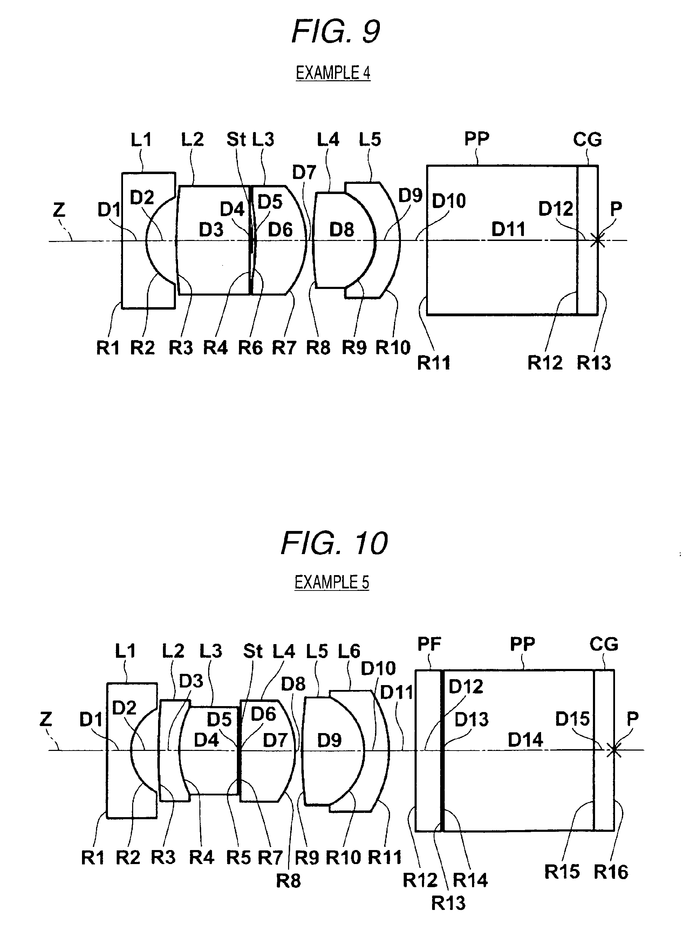

Table 4 shows lens data of the imaging optical system according to Example 4, and Fig. 9 is a lens configuration diagram thereof. In Fig. 9, the reference signs Ri and Di (i = 1, 2, 3 ···) correspond to the Ri and the Di in Table 4. The imaging optical system according to Example 4 is configured to have five lenses L1 to L5 in four groups. In addition, in the lens data in Table 4 and the configuration diagram in Fig. 9, there are also shown an aperture diaphragm St and optical members PP and CG having a plane parallel plate shape such as a filter, a prism, and a cover glass disposed between the lens system and the imaging point P.

Table 4

| Example 4 | | | | |
|---|---|---|---|---|
| SURFACE NUMBER | Ri | Di | Ndj | νdj |
| 1 | ∞ | 0.350 | 1.88300 | 40.8 |
| 2 | 0.703 | 0.441 | | |
| 3 | 7.135 | 1.070 | 1.92286 | 18.9 |

(continued)

| Example 4 | | | | |
|---|---|---|---|---|
| SURFACE NUMBER | Ri | Di | Ndj | vdj |
| 4 | ∞ | 0.000 | | |
| 5 (APERTURE DIAPHRAGM) | DIAPHRAG M | 0.085 | | |
| 6 | -3.647 | 0.730 | 1.71300 | 53.9 |
| 7 | -1.212 | 0.100 | | |
| 8 | 5.048 | 0.910 | 1.62041 | 60.3 |
| 9 | -0.778 | 0.350 | 1.92286 | 18.9 |
| 10 | -1.382 | 0.396 | | |
| 11 | ∞ | 2.200 | 1.55920 | 53.9 |
| 12 | ∞ | 0.300 | 1.51633 | 64.1 |
| 13 (IMAGE PLANE) | ∞ | | | |

<Example 5>

Table 5 shows lens data of the imaging optical system according to Example 5, and Fig. 10 is a lens configuration diagram thereof. In Fig. 10, the reference signs Ri and Di (i = 1, 2, 3 ...) correspond to the Ri and the Di in Table 5. The imaging optical system according to Example 5 is configured to have six lenses L1 to L6 in four groups. In addition, in the lens data in Table 5 and the configuration diagram in Fig. 10, there are also shown an aperture diaphragm St and optical members PF, PP, and CG having a plane parallel plate shape such as a filter, a prism, and a cover glass disposed between the lens system and the imaging point P.

Table 5

| Example 5 | | | | |
|---|---|---|---|---|
| SURFACE NUMBER | Ri | Di | Ndj | vdj |
| 1 | ∞ | 0.350 | 1.88300 | 40.8 |
| 2 | 0.703 | 0.404 | | |
| 3 | 8.985 | 0.300 | 1.80400 | 46.6 |
| 4 | 1.471 | 0.850 | 1.84666 | 23.8 |
| 5 | ∞ | 0.000 | | |
| 6 (APERTURE DIAPHRAGM) | ∞ | 0.035 | | |
| 7 | ∞ | 0.790 | 1.62041 | 60.3 |
| 8 | -1.25 | 0.100 | | |
| 9 | 6.723 | 0.900 | 1.62041 | 60.3 |
| 10 | -0.892 | 0.360 | 1.92286 | 18.9 |
| 11 | -1.661 | 0.361 | | |
| 12 | ∞ | 0.380 | 1.51633 | 64.1 |
| 13 | ∞ | 0.035 | | |
| 14 | ∞ | 2.200 | 1.55920 | 53.9 |
| 15 | ∞ | 0.300 | 1.51633 | 64.1 |
| 16 (IMAGE PLANE) | ∞ | | | |

<Example 6>

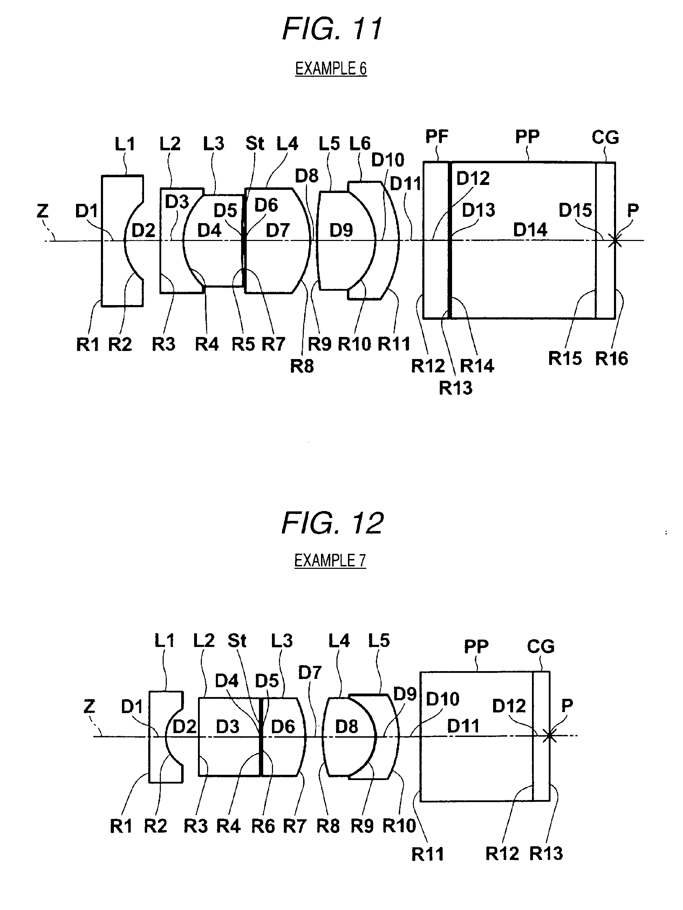

Table 6 shows lens data of the imaging optical system according to Example 6, and Fig. 11 is a lens configuration diagram thereof. In Fig. 11, the reference signs Ri and Di (i = 1,2,3 ...) correspond to the Ri and the Di in Table 6. The imaging optical system according to Example 6 is configured to have six lenses L1 to L6 in four groups. In addition, in the lens data in Table 6 and the configuration diagram in Fig. 11, there are also shown an aperture diaphragm St and optical members PF, PP, and CG having a plane parallel plate shape such as a filter, a prism, and a cover glass disposed between the lens system and the imaging point P.

Table 6

| Example 6 | | | | |
|---|---|---|---|---|
| SURFACE NUMBER | Ri | Di | Ndj | vdj |
| 1 | ∞ | 0.350 | 1.88300 | 40.8 |
| 2 | 0.778 | 0.545 | | |
| 3 | ∞ | 0.350 | 1.83481 | 42.7 |
| 4 | 0.953 | 0.890 | 1.84666 | 23.8 |
| 5 | 9.553 | 0.016 | | |
| 6 (APERTURE DIAPHRAGM) | ∞ | 0.035 | | |
| 7 | ∞ | 0.980 | 1.62041 | 60.3 |
| 8 | -1.304 | 0.100 | | |
| 9 | 5.675 | 0.890 | 1.62041 | 60.3 |
| 10 | -0.892 | 0.360 | 1.92286 | 18.9 |
| 11 | -1.594 | 0.379 | | |
| 12 | ∞ | 0.380 | 1.51633 | 64.1 |
| 13 | ∞ | 0.035 | | |
| 14 | ∞ | 2.200 | 1.55920 | 53.6 |
| 15 | ∞ | 0.300 | 1.51633 | 64.1 |
| 16 (IMAGE PLANE) | ∞ | | | |

<Example 7>

Table 7 shows lens data of the imaging optical system according to Example 7, and Fig. 12 is a lens configuration diagram thereof. In Fig. 12, the reference signs Ri and Di (i = 1, 2, 3 ···) correspond to the Ri and the Di in Table 7. The imaging optical system according to Example 7 is configured to have five lenses L1 to L5 in four groups. In addition, in the lens data in Table 7 and the configuration diagram in Fig. 12, there are also shown an aperture diaphragm St and optical members PP and CG having a plane parallel plate shape such as a filter, a prism, and a cover glass disposed between the lens system and the imaging point P.

Table 7

| Example 7 | | | | |
|---|---|---|---|---|
| SURFACE NUMBER | Ri | Di | Ndj | vdj |
| 1 | ∞ | 0.250 | 1.88300 | 40.8 |
| 2 | 0.5 | 0.500 | | |
| 3 | ∞ | 0.920 | 1.92286 | 18.9 |
| 4 | ∞ | 0.000 | | |
| 5 (APERTURE DIAPHRAGM) | ∞ | 0.035 | | |

(continued)

| Example 7 | | | | |
|---|---|---|---|---|
| SURFACE NUMBER | Ri | Di | Ndj | νdj |
| 6 | ∞ | 0.650 | 1.71300 | 53.9 |
| 7 | -1.426 | 0.260 | | |
| 8 | 1.901 | 0.810 | 1.62041 | 60.3 |
| 9 | -0.644 | 0.350 | 1.92286 | 18.9 |
| 10 | -1.304 | 0.371 | | |
| 11 | ∞ | 1.700 | 1.55920 | 53.9 |
| 12 | ∞ | 0.250 | 1.51633 | 64.1 |
| 13 (IMAGE PLANE) | ∞ | | | |

Tables 8 to 11 show values corresponding to various data and the conditional expression (1) in Examples 1 to 7 mentioned above. A part of the reference signs noted in Tables 8 to 11 correspond to the reference signs shown in Fig. 1. In Fig. 1, other than the reference signs mentioned above, there are shown a focal length f, a front focus Ff, a back focus Bf, a distance Xo from a front focus position to the object distance Po, and a distance Xi from the back focus position to the imaging position Pi.

In Tables 8 to 11, "set object distance" is a distance from an object side surface of the lens L1 to the predetermined object distance Po preset initially. In addition, "V size" is the size of V mentioned above, and "TV lines" is a value used to determine the least circle of confusion diameter δ represented by the expression: the least circle of confusion diameter δ = 2V/(the number of TV lines).

In addition, "set object distance" "near point", and "far point" noted on the left end column in each table mean the case where the object is disposed on the set object distance, the case where the object is disposed on the near point, and the case where the object is disposed on the far point, respectively. For example, "object distance" in the row of "near point" means an object distance at the time of observation on the near point side, that is, a distance from the object side surface of the lens L1 to the near point. Likewise, "object distance" in the row of "far point" means an object distance at the time of observation on the far point side, that is, a distance from the object side surface of the lens L1 to the far point.

Explaining the low of the near point as an example, "spherical aberration" is an amount of the spherical aberration Zn of a ray transmitted through 70% of the pupil diameter, "S field curvature" is an amount of the field curvature in the sagittal direction Sn at 80% of the maximum image height, "T field curvature" is an amount of the field curvature in the tangential direction Tn at 80% of the maximum image height, and "S, T mean value" is a mean value Mn of the amounts of field curvature in the two directions (the sagittal and tangential directions) calculated by the equation (Tn + Sn)/2, and "difference" is calculated by the equation Mn-Zn. The description just mentioned above is also similarly applied to the rows of the set object distance and the far point.

In Tables 8 to 11, with respect to Example 1, 3, 4, 5, and 6, the TV lines and the set object distance are defined as variables, and with respect to Example 2, the set object distance is defined as a variable.

Table 8

| | | | | EXAMPLE 1 | | | EXAMPLE 2 | |
|---|---|---|---|---|---|---|---|---|
| | | | | EX 1-1 | EX 1-2 | EX 1-3 | EX 1-2 | EX 2-2 |
| | IMAGE HEIGHT | (mm) | Y | 1.20 | 1.20 | 1.20 | 1.00 | 1.00 |
| | FOCAL LENGTH | (mm) | f | 1.2057 | 1.2057 | 1.2057 | 1.0293 | 1.0293 |
| | FRONT FOCUS | (mm) | Ff | 0.4770 | 0.4770 | 0.4770 | 0.5988 | 0.5988 |
| | TOTAL ANGLE OF VIEW | (DEGREES) | 2ω | 134.8 | 134.8 | 133.3 | 131.1 | 129.9 |

(continued)

|  |  |  |  | EXAMPLE 1 | | | EXAMPLE 2 | |
|---|---|---|---|---|---|---|---|---|
|  |  |  |  | EX 1-1 | EX 1-2 | EX 1-3 | EX 1-2 | EX 2-2 |
|  | APERTURE DIAPHRAGM DIAMETER | (mm) | φ | 0.40 | 0.40 | 0.40 | 0.35 | 0.35 |
| SET OBJECT DISTANCE | SET OBJECT DISTANCE | (mm) |  | 10.0 | 10.0 | 8.0 | 8.0 | 6.0 |
|  | EFFECTIVE F NUMBER |  | Fe | 6.641 | 6.641 | 6.682 | 6.617 | 6.653 |
|  | V SIZE | (mm) | V | 1.80 | 1.80 | 1.80 | 1.80 | 1.80 |
|  | TV LINES | (LINES) |  | 240 | 160 | 160 | 160 | 160 |
|  | THE LEAST CIRCLE OF CONFUSION DIAMETER | (mm) | δ | 0.0150 | 0.0225 | 0.0225 | 0.0225 | 0.0225 |
|  | DEPTH OF FOCUS | (mm) | d | 0.0996 | 0.1494 | 0.1503 | 0.1489 | 0.1497 |
|  | OBJECT DISTANCE | (mm) |  | 10.0 | 10.0 | 8.0 | 8.0 | 6.0 |
|  | IMAGE DISTANCE | (mm) | Xi | 0.1388 | 0.1388 | 0.1715 | 0.1232 | 0.1605 |
|  | SPHERICAL ABERRATION | (μm) | Z | -4.4 | -4.4 | -4.5 | -2.3 | -2.5 |
|  | S FIELD CURVATURE | (μm) | S | -8.3 | -8.3 | -17.1 | -26.2 | -35.4 |
|  | T FIELD CURVATURE | (μm) | T | -37.9 | -37.9 | -58.3 | -74.9 | -96.7 |
|  | S, T MEAN VALUE | (μm) | M | -23.1 | -23.1 | -37.7 | -50.6 | -66.0 |
|  | DIFFERENCE | (μm) | M-Z | -18.7 | -18.7 | -33.2 | -48.3 | -63.5 |
| NEAR POINT | OBJECT DISTANCE | (mm) | Dnear | 5.62 | 4.57 | 4.04 | 3.29 | 2.82 |
|  | SPHERICAL ABERRATION | (μm) | Zn | -4.8 | -5.0 | -5.2 | -3.1 | -3.4 |
|  | S FIELD CURVATURE | (μm) | Sn | -33.9 | -45.3 | -52.5 | -59.5 | -66.5 |
|  | T FIELD CURVATURE | (μm) | Tn | -98.1 | -125.9 | -144.1 | -158.8 | -175.2 |
|  | S, T MEAN VALUE | (μm) | Mn | -66.0 | -85.6 | -98.3 | -109.2 | -120.8 |
|  | DIFFERENCE | (μm) | Mn-Zn | -61.1 | -80.6 | -93.2 | -106.0 | -117.5 |

(continued)

|  |  |  |  | EXAMPLE 1 | | | EXAMPLE 2 | |
|---|---|---|---|---|---|---|---|---|
|  |  |  |  | EX 1-1 | EX 1-2 | EX 1-3 | EX 1-2 | EX 2-2 |
| FAR POINT | OBJECT DISTANCE | (mm) | Dfar | 36.7 | ∞ | 68.3 | ∞ | 97.1 |
|  | SPHERICAL ABERRATION | (μm) | Zf | -4.0 | -3.8 | -3.9 | -1.6 | -1.7 |
|  | S FIELD CURVATURE | (μm) | Sf | 21.1 | 33.8 | 26.9 | 8.2 | 4.9 |
|  | T FIELD CURVATURE | (μm) | Tf | 27.9 | 55.3 | 40.4 | 2.8 | -4.4 |
|  | S, T MEAN VALUE | (μm) | Mf | 24.5 | 44.6 | 33.6 | 5.5 | 0.3 |
|  | DIFFERENCE | (μm) | Mf-Zf | 28.5 | 48.4 | 37.5 | 7.1 | 2.0 |
|  | $\dfrac{(Tf+Sf)/2-Zf}{(Tn+Sn)/2-Zn}$ Eq. (1) |  |  | -0.47 | -0.60 | -0.40 | -0.07 | -0.02 |

Table 9

| | | | | EXAMPLE 3 | | | EXAMPLE 4 | | |
|---|---|---|---|---|---|---|---|---|---|
| | | | | EX 3-1 | EX 3-2 | EX 3-3 | EX 4-1 | EX 4-2 | EX 4-3 |
| | IMAGE HEIGHT | (mm) | Y | 0.90 | 0.90 | 0.90 | 0.75 | 0.75 | 0.75 |
| | FOCAL LENGTH | (mm) | f | 0.9223 | 0.9223 | 0.9223 | 0.7650 | 0.7650 | 0.7650 |
| | FRONT FOCUS | (mm) | Ff | 0.4517 | 0.4517 | 0.4517 | 0.5467 | 0.5467 | 0.5467 |
| | TOTAL ANGLE OF VIEW | (DEGREES) | $2\omega$ | 134.9 | 134.9 | 134 | 137.1 | 137.1 | 136.6 |
| | APERTURE DIAPHRAGM DIAMETER | (mm) | $\phi$ | 0.35 | 0.35 | 0.35 | 0.35 | 0.35 | 0.45 |
| | SET OBJECT DISTANCE | (mm) | | 10.0 | 10.0 | 8.0 | 10.0 | 10.0 | 8.0 |
| | EFFECTIVE F NUMBER | | Fe | 5.177 | 5.177 | 5.177 | 4.807 | 4.807 | 3.75 |
| | V SIZE | (mm) | V | 1.35 | 1.35 | 1.35 | 1.35 | 1.35 | 1.35 |
| | TV LINES | (LINES) | | 240 | 160 | 160 | 240 | 160 | 160 |
| | THE LEAST CIRCLE OF CONFUSION DIAMETER | (mm) | $\delta$ | 0.0113 | 0.0169 | 0.0169 | 0.0113 | 0.0169 | 0.0169 |
| | DEPTH OF FOCUS | (mm) | d | 0.0582 | 0.0874 | 0.0874 | 0.0541 | 0.0811 | 0.0633 |
| SET OBJECT DISTANCE | OBJECT DISTANCE | (mm) | | 10.0 | 10.0 | 8.0 | 10.0 | 10.0 | 8.0 |
| | IMAGE DISTANCE | (mm) | Xi | 0.08 14 | 0.08 14 | 0.1007 | 0.0555 | 0.0555 | 0.0685 |
| | SPHERICAL ABERRATION | ($\mu$m) | Z | -10.6 | -10.6 | -10.7 | -12.4 | -12.4 | -20.4 |
| | S FIELD CURVATURE | ($\mu$m) | S | -0.9 | -0.9 | -5.4 | -6.5 | -6.5 | -10.2 |
| | T FIELD CURVATURE | ($\mu$m) | T | -22.5 | -22.5 | -34.8 | -32.4 | -32.4 | -40.7 |
| | S, T MEAN VALUE | ($\mu$m) | M | -11.7 | -11.7 | -20.1 | -19.4 | -19.4 | -25.4 |
| | DIFFERENCE | ($\mu$m) | M-Z | -1.1 | -1.1 | -9.4 | -7.0 | -7.0 | -5.1 |
| NEAR POINT | OBJECT DISTANCE | (mm) | Dnear | 5.64 | 4.59 | 4.07 | 4.79 | 3.74 | 3.90 |
| | SPHERICAL ABERRATION | ($\mu$m) | Zn | -11.0 | -11.2 | -11.4 | -13.0 | -13.3 | -13.7 |
| | S FIELD CURVATURE | ($\mu$m) | Sn | -15.8 | -23.1 | -27.8 | -21.1 | -27.8 | -26.6 |
| | T FIELD CURVATURE | ($\mu$m) | Tn | -58.8 | -76.2 | -87.4 | -66.1 | -82.0 | -79.2 |
| | S, T MEAN VALUE | ($\mu$m) | Mn | -37.3 | -49.6 | -57.6 | -43.6 | -54.9 | -52.9 |
| | DIFFERENCE | ($\mu$m) | Mn-Zn | -26.3 | -38.4 | -46.2 | -30.7 | -41.6 | -39.2 |

(continued)

| FAR POINT | | | EXAMPLE 3 | | | EXAMPLE 4 | | |
|---|---|---|---|---|---|---|---|---|
| | | | EX 3-1 | EX 3-2 | EX 3-3 | EX 4-1 | EX 4-2 | EX 4-3 |
| OBJECT DISTANCE | Dfar | (mm) | 36.3 | ∞ | 63.5 | 413.0 | ∞ | 112.0 |
| SPHERICAL ABERRATION | Zf | (μm) | -10.2 | -10.0 | -10.1 | -11.9 | -11.9 | -12.3 |
| S FIELD CURVATURE | Sf | (μm) | 17.4 | 24.7 | 20.4 | 9.9 | 10.4 | 8.7 |
| T FIELD CURVATURE | Tf | (μm) | 16.0 | 31.8 | 22.7 | 3.6 | 4.6 | 1.0 |
| S, T MEAN VALUE | Mf | (μm) | 16.7 | 28.3 | 21.6 | 6.8 | 7.5 | 4.9 |
| DIFFERENCE | Mf-Zf | (μm) | 26.8 | 38.3 | 31.7 | 18.7 | 19.4 | 17.2 |
| $\dfrac{(Tf+Sf)/2-Zf}{(Tn+Sn)/2-Zn}$  Eq. (1) | | | -1.02 | -1.00 | -0.68 | -0.61 | -0.47 | -0.44 |

Table 10

| | | | EXAMPLE 5 | | | EXAMPLE 6 | | |
|---|---|---|---|---|---|---|---|---|
| | | | EX 5-1 | EX 5-2 | EX 5-3 | EX 6-1 | EX 6-2 | EX 6-3 |
| | IMAGE HEIGHT | Y | (mm) | 0.90 | 0.90 | 0.90 | 0.75 | 0.75 | 0.75 |
| | FOCAL LENGTH | f | (mm) | 0.9137 | 0.9137 | 0.9137 | 0.7626 | 0.7626 | 0.7626 |
| | FRONT FOCUS | Ff | (mm) | 0.4894 | 0.4894 | 0.4894 | 0.6172 | 0.6172 | 0.6172 |
| | TOTAL ANGLE OF VIEW | 2ω | (DEGREES) | 134.8 | 134.8 | 134.8 | 137.8 | 137.8 | 137.5 |
| | APERTURE DIAPHRAGM DIAMETER | φ | (mm) | 0.40 | 0.40 | 0.40 | 0.40 | 0.40 | 0.45 |
| | SET OBJECT DISTANCE | | (mm) | 10.0 | 10.0 | 8.0 | 8.0 | 8.0 | 7.0 |
| | EFFECTIVE F NUMBER | Fe | | 5.17 | 5.17 | 5.188 | 4.695 | 4.695 | 4.179 |
| | V SIZE | V | (mm) | 1.35 | 1.35 | 1.35 | 1.35 | 1.35 | 1.35 |
| | TV LINES | | (LINES) | 240 | 160 | 160 | 240 | 160 | 160 |
| | THE LEAST CIRCLE OF CONFUSION DIAMETER | δ | (mm) | 0.0113 | 0.0169 | 0.0169 | 0.0113 | 0.0169 | 0.0169 |
| | DEPTH OF FOCUS | d | (mm) | 0.0582 | 0.0872 | 0.0875 | 0.0528 | 0.0792 | 0.0705 |
| SET OBJECT DISTANCE | OBJECT DISTANCE | Xi | (mm) | 10.0 | 10.0 | 8.0 | 8.0 | 8.0 | 7.0 |
| | IMAGE DISTANCE | Z | (mm) | 0.0796 | 0.0796 | 0.0983 | 0.0675 | 0.0675 | 0.0764 |
| | SPHERICAL ABERRATION | S | (μm) | -12.3 | -12.3 | -12.4 | -16.8 | -16.8 | -21.2 |
| | S FIELD CURVATURE | T | (μm) | -0.7 | -0.7 | -5.8 | -2.1 | -2.1 | -4.5 |
| | T FIELD CURVATURE | M | (μm) | -20.6 | -20.6 | -32.3 | -26.9 | -26.9 | -32.5 |
| | S, T MEAN VALUE | M-Z | (μm) | -10.7 | -10.7 | -19.1 | -14.5 | -14.5 | -18.5 |
| | DIFFERENCE | | (μm) | 1.6 | 1.6 | -6.7 | -10.1 | -10.1 | -11.3 |
| NEAR POINT | OBJECT DISTANCE | Dnear | (mm) | 5.57 | 4.51 | 4.00 | 4.22 | 3.35 | 3.34 |
| | SPHERICAL ABERRATION | Zn | (μm) | -12.8 | -13.1 | -13.3 | -17.3 | -17.6 | -18.3 |
| | S FIELD CURVATURE | Sn | (μm) | -16.0 | -23.1 | -27.5 | -15.9 | -22.2 | -22.2 |
| | T FIELD CURVATURE | Tn | (μm) | -56.2 | -73.1 | -83.8 | -59.3 | -74.6 | -74.8 |
| | S, T MEAN VALUE | Mn | (μm) | -36.1 | -48.1 | -55.6 | -37.6 | -48.4 | -48.5 |
| | DIFFERENCE | Mn-Zn | (μm) | -23.3 | -35.0 | -42.4 | -20.3 | -30.8 | -30.2 |

(continued)

| | | | | EXAMPLE 5 | | | EXAMPLE 6 | | |
|---|---|---|---|---|---|---|---|---|---|
| | | | | EX 5-1 | EX 5-2 | EX 5-3 | EX 6-1 | EX 6-2 | EX 6-3 |
| FAR POINT | OBJECT DISTANCE | (mm) | Dfar | 38.5 | ∞ | 76.9 | 39.0 | ∞ | 99.0 |
| | SPHERICAL ABERRATION | (μm) | Zf | -11.7 | -11.5 | -11.6 | -16.3 | -16.2 | -16.9 |
| | S FIELD CURVATURE | (μm) | Sf | 16.2 | 22.9 | 19.5 | 13.6 | 18.3 | 16.4 |
| | T FIELD CURVATURE | (μm) | Tf | 17.2 | 31.8 | 24.4 | 7.8 | 17.9 | 13.9 |
| | S, T MEAN VALUE | (μm) | Mf | 16.7 | 27.3 | 22.0 | 10.7 | 18.1 | 15.1 |
| | DIFFERENCE | (μm) | Mf-Zf | 28.4 | 38.8 | 33.6 | 27.0 | 34.2 | 32.0 |
| | $\dfrac{(Tf+Sf)/2-Zf}{(Tn+Sn)/2-Zn}$  Eq. (1) | | | -1.22 | -1.11 | -0.79 | -1.33 | -1.11 | -1.06 |

Table 11

| | | | | EXAMPLE 7 | | |
|---|---|---|---|---|---|---|
| | | | | EX 7-1 | EX 7-2 | EX 7-3 |
| | IMAGE HEIGHT | (mm) | Y | 0.50 | 0.50 | 0.50 |
| | FOCAL LENGTH | (mm) | f | 0.5473 | 0.5473 | 0.5473 |
| | FRONT FOCUS | (mm) | Ff | 0.4431 | 0.4431 | 0.4431 |
| | TOTAL ANGLE OF VIEW | (DEGREES) | $2\omega$ | 124.5 | 124.5 | 124 |
| | APERTURE DIAPHRAGM DIAMETER | (mm) | $\phi$ | 0.35 | 0.35 | 0.40 |
| | SET OBJECT DISTANCE | (mm) | | 7.0 | 7.0 | 5.0 |
| | EFFECTIVE F NUMBER | | Fe | 4.432 | 4.432 | 3.901 |
| | V SIZE | (mm) | V | 1.00 | 1.00 | 1.00 |
| | TV LINES | (LINES) | | 240 | 160 | 160 |
| | THE LEAST CIRCLE OF CONFUSION DIAMETER | (mm) | $\delta$ | 0.0083 | 0.0125 | 0.0125 |
| | DEPTH OF FOCUS | (mm) | d | 0.0369 | 0.0554 | 0.0488 |
| SET OBJECT DISTANCE | OBJECT DISTANCE | (mm) | | 7.0 | 7.0 | 5.0 |
| | IMAGE DISTANCE | (mm) | Xi | 0.0402 | 0.0402 | 0.0550 |
| | SPHERICAL ABERRATION | ($\mu$m) | Z | 5.3 | 5.3 | 7.0 |
| | S FIELD CURVATURE | ($\mu$m) | S | 2.4 | 2.4 | -1.3 |
| | T FIELD CURVATURE | ($\mu$m) | T | -21.1 | -21.1 | -29.8 |
| | S, T MEAN VALUE | ($\mu$m) | M | -9.3 | -9.3 | -15.5 |
| | DIFFERENCE | ($\mu$m) | M-Z | -26.4 | -26.4 | -36.8 |
| NEAR POINT | OBJECT DISTANCE | (mm) | Dnear | 3.44 | 2.69 | 2.44 |
| | SPHERICAL ABERRATION | ($\mu$m) | Zn | 3.7 | 3.6 | 3.5 |
| | S FIELD CURVATURE | ($\mu$m) | Sn | -6.5 | -10.6 | -12.4 |
| | T FIELD CURVATURE | ($\mu$m) | Tn | -42.4 | -52.4 | -56.8 |
| | S, T MEAN VALUE | ($\mu$m) | Mn | -24.4 | -31.5 | -34.6 |
| | DIFFERENCE | ($\mu$m) | Mn-Zn | -28.1 | -35.1 | -38.1 |
| FAR POINT | OBJECT DISTANCE | (mm) | Dfar | 90.1 | $\infty$ | 47.4 |
| | SPHERICAL ABERRATION | ($\mu$m) | Zf | 4.2 | 4.2 | 4.1 |
| | S FIELD CURVATURE | ($\mu$m) | Sf | 12.4 | 13.4 | 11.6 |
| | T FIELD CURVATURE | ($\mu$m) | Tf | 1.5 | 3.6 | 0.0 |
| | S, T MEAN VALUE | ($\mu$m) | Mf | 7.0 | 8.5 | 5.8 |
| | DIFFERENCE | ($\mu$m) | Mf-Zf | 2.8 | 4.3 | 1.7 |
| | $\dfrac{(Tf+Sf)/2-Zf}{(Tn+Sn)/2-Zn}$ | | Eq. (1) | -0.10 | -0.12 | -0.04 |

As known from the values corresponding to the expression (1) in Tables 8 to 11, the examples satisfy the conditional expression (1). In these examples, even when the object distance changes in the range of the observable distance, extreme deterioration in the image is not caused. Thus, it is possible to obtain a fine image.

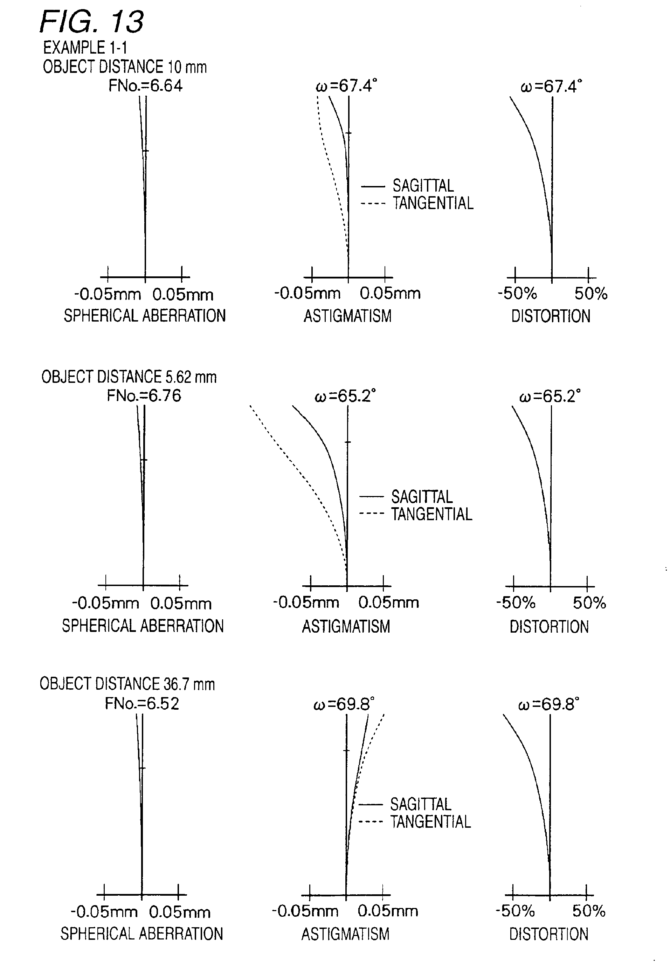

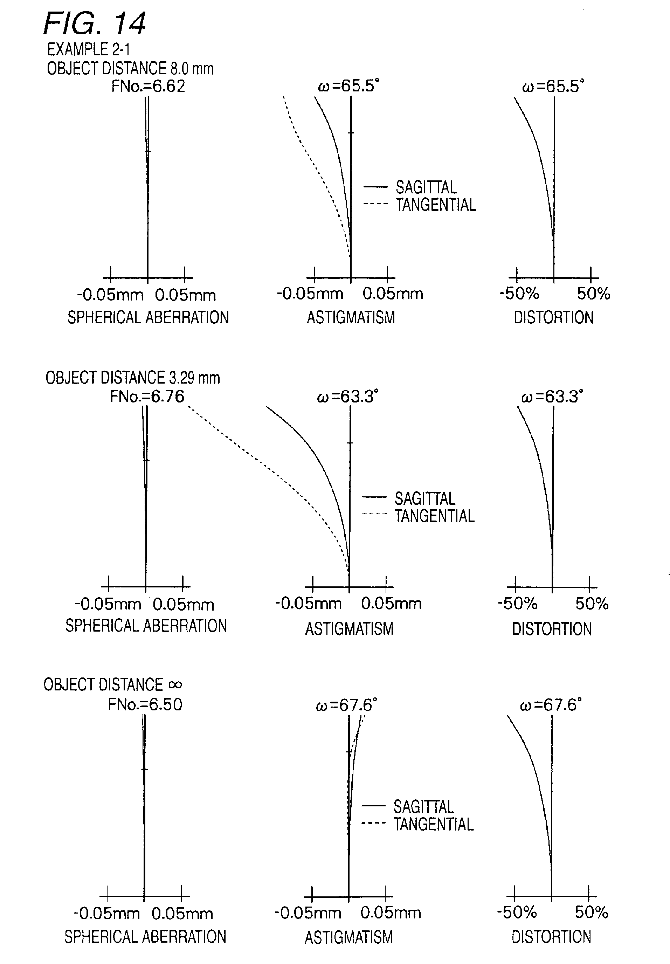

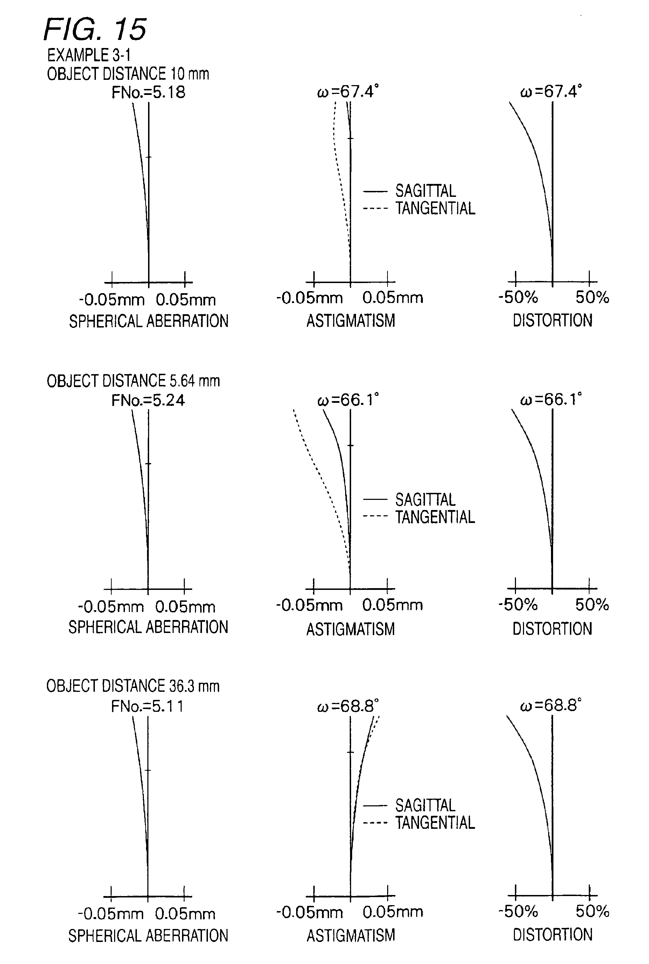

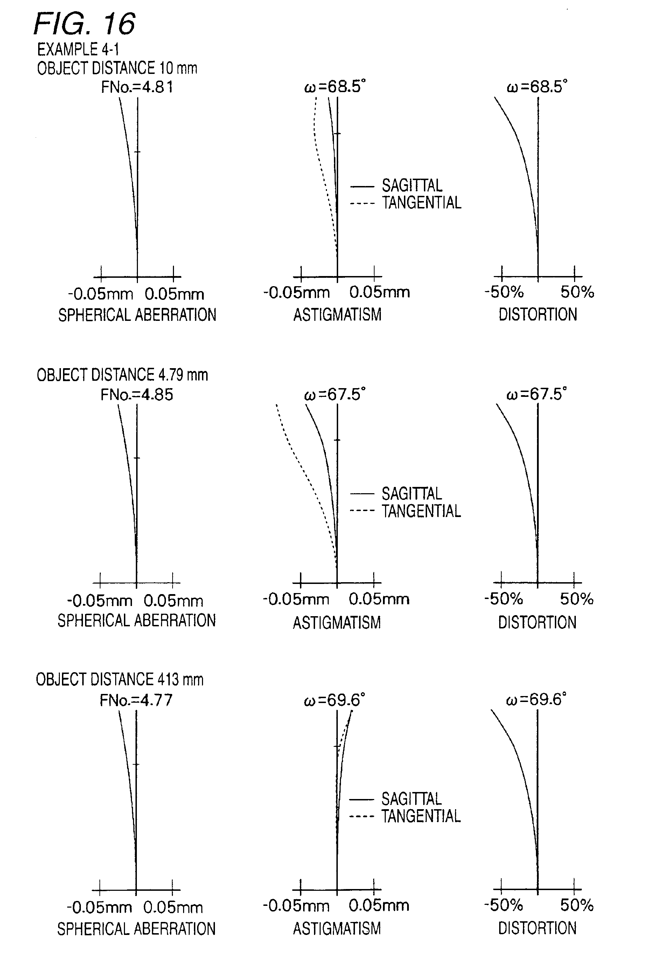

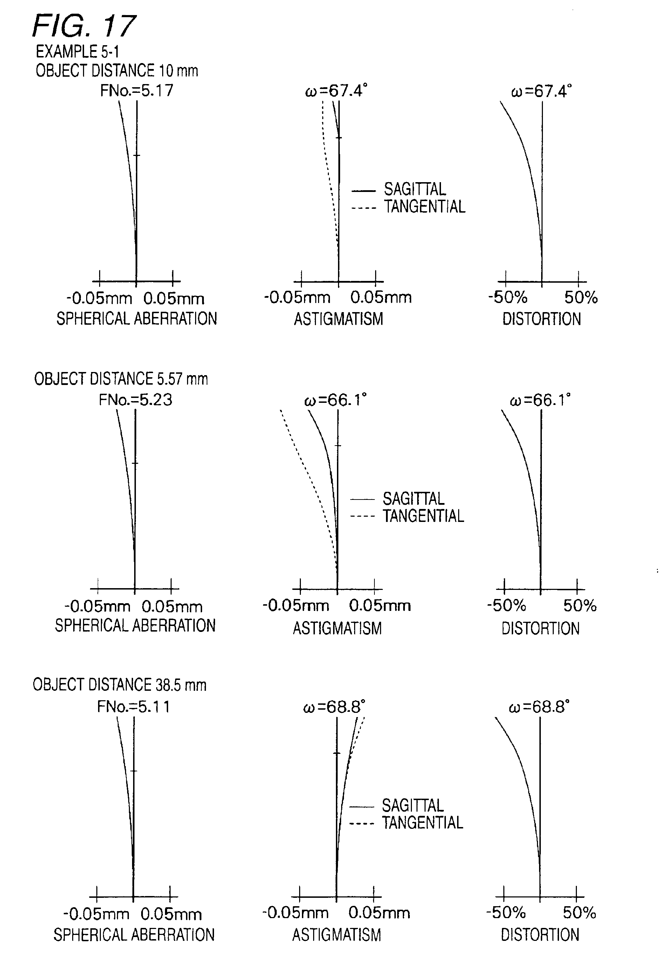

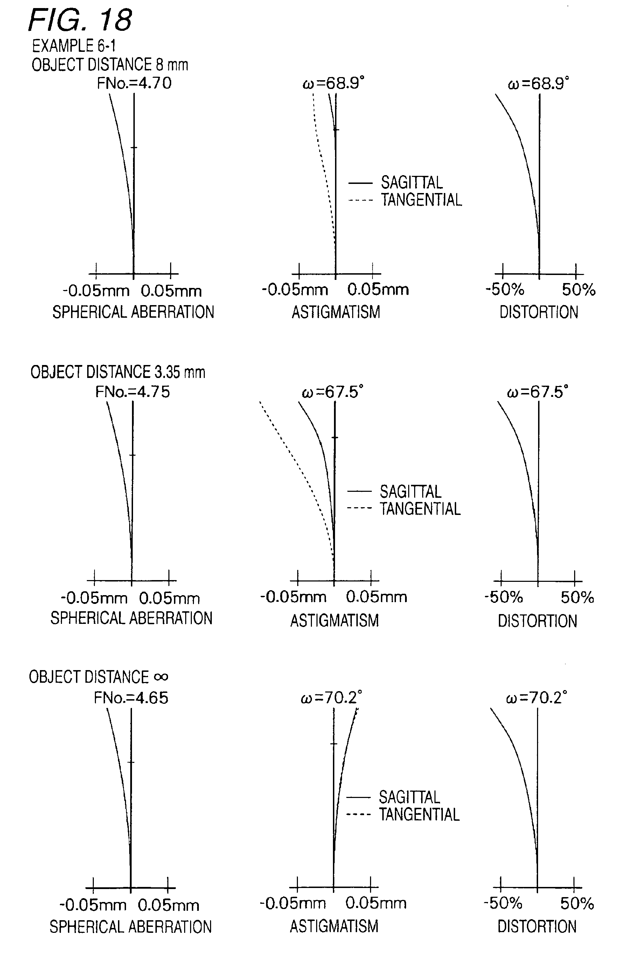

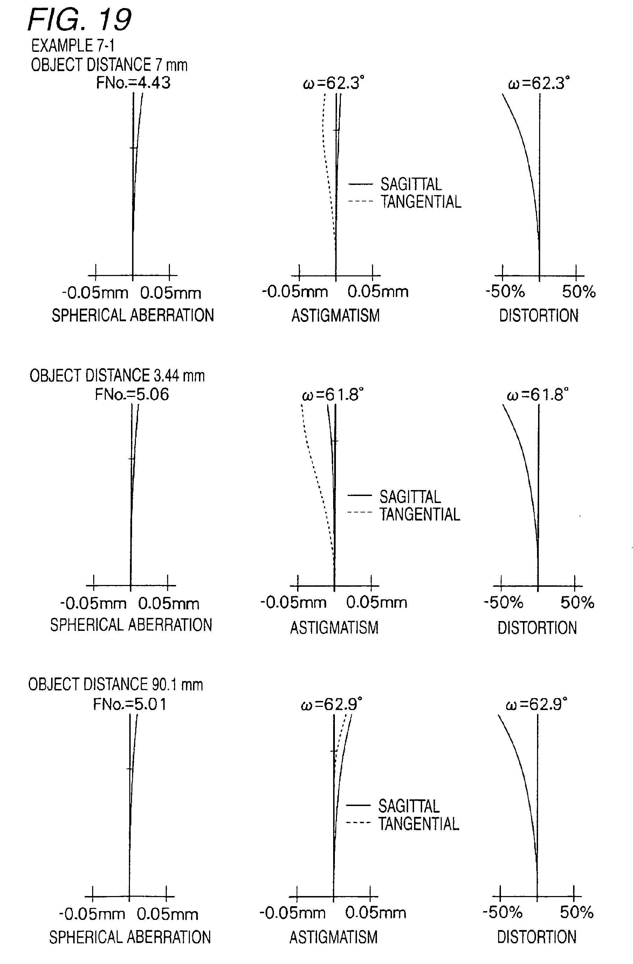

Figs. 13 to 19 show spherical aberration, astigmatism, distortion in the imaging optical system according to Examples 1 to 7, respectively. In the aberration diagrams, there are shown aberrations at the d-line as a reference wavelength. In the astigmatism diagram, the solid line represents a sagittal direction, and the wavy line represents aberrations of a tangential direction. The FNo. in the spherical aberration diagram represents a F number, and the $\omega$ in the other aberration diagrams represents a half angle of view. As known from Figs. 13 to 19, in Examples 1 to 7, aberrations are satisfactorily corrected.

Here, the aberration diagrams in Figs. 13 to 19 correspond to examples shown in Tables 8 to 11. For example, the aberration diagrams of the upper part, the middle part, and the lower part in Fig. 13 written as "Example 1-1" correspond to the case where the object is disposed on the set object distance, the case where the object is disposed on the near point, and the case where the object is disposed on the far point, in the column written as "Example 1-1" in Table 8, respectively. The description just mentioned above is similarly applied to the other aberration diagrams.

In addition, in the embodiment mentioned above, the least circle of confusion diameter is determined by resolution and an observable distance. However, in an endoscope imaging apparatus in which an image is formed by an imaging device having a plurality of pixels arranged thereon, it can be considered that the least circle of confusion diameter is determined from a pitch of the pixel arrangement of the imaging device.

For example, the V size in examples shown in Tables 8 to 11 is in the range of 1.0 to 1.8 mm. From this, when the V size is applied to the range of the least circle of confusion diameter $\delta$, that is, $2V/240 \leq \delta \leq 2V/160$, the resultant value of the least circle of confusion diameter $\delta$ is expressed by 0.0083 mm $\leq \delta \leq$ 0.0225 mm. Here, when the pitch of the pixels in the imaging device is set by about 2 $\mu$m, the least circle of confusion diameter $\delta$ corresponds to a length of 4 to 10 pixels.

Specifically, Table 12 shows a ratio $\delta/P$ of the least circle of confusion diameter $\delta$ to pitch P at the time when the pixel pitch P is set by 2 $\mu$m or 1.8 $\mu$m, in examples shown in Tables 8 to 11. Since the ratio $\delta/P$ shown in Table 12 has values in the range of 4.2 to 11.3, the range of the least circle of confusion diameter $\delta$ is expressed in terms of the pixel pitch P of the imaging device as $4P \leq \delta \leq 10P$. On the basis of this, depth of field may be determined.

Table 12

| | EXAMPLE 1 | | | EXAMPLE 2 | | EXAMPLE 3 | | |
|---|---|---|---|---|---|---|---|---|
| | EX 1-1 | EX 1-2 | EX 1-3 | EX 2-1 | EX 2-2 | EX 3-1 | EX 3-2 | EX 3-3 |
| PITCH ($\mu$m) P | 2 | 2 | 2 | 2 | 2 | 1.8 | 1.8 | 1.8 |
| RATIO $\delta/P$ | 7.5 | 11.3 | 11.3 | 11.3 | 11.3 | 6.3 | 9.4 | 9.4 |
| | EXAMPLE 4 | | | EXAMPLE 5 | | | | |
| | EX 4-1 | EX 4-2 | EX 4-3 | EX 5-1 | EX 5-2 | EX 5-3 | | |
| PITCH ($\mu$m) P | 1.8 | 1.8 | 1.8 | 1.8 | 1.8 | 1.8 | | |
| RATIO $\delta/P$ | 6.3 | 9.4 | 9.4 | 6.3 | 9.4 | 9.4 | | |
| | EXAMPLE 6 | | | EXAMPLE 7 | | | | |
| | EX 6-1 | EX 6-2 | EX 6-3 | EX 7-1 | EX 7-2 | EX 7-3 | | |
| PITCH ($\mu$m) P | 1.8 | 1.8 | 1.8 | 2 | 2 | 2 | | |
| RATIO $\delta/P$ | 6.3 | 9.4 | 9.4 | 4.2 | 6.3 | 6.3 | | |

The invention has been described with reference to the embodiment and the examples, but the invention is not limited to the embodiment mentioned above, and may be modified to various forms. For example, the values of a radius of curvature, an on-axis surface spacing, and a refractive index of the lens components are not limited to the values noted in the numerical examples, and can have the other values.

For example, in the embodiment, and a mean value of the field curvature in the sagittal direction and the field curvature in the tangential direction at 80% of the image height is used. However, in a case where even the most periphery of the screen is seriously considered, a mean value of the field curvature in the sagittal direction and the field curvature in the tangential direction at 100% (the maximum image height) of the image height may be used. Conversely, in a case where it is possible to obtain a fine image even at about 50% of the image height, a mean value of the field curvature in the sagittal direction and the field curvature in the tangential direction at 50% of the image height may be used.

As described above, it is possible to optionally set what percent of the image height the amount of field curvature is used at, in accordance with specification of the required optical system. Likewise, even in spherical aberration, it is possible to properly set what percent of pupil diameter spherical aberration caused by a ray transmitted therethrough is used at, as occasion demands.

In addition, in the embodiment, it is assumed that the field curvature in the sagittal direction is equivalent to the field curvature in the tangential direction, and a mean value of those is used. However, the field curvature in the sagittal direction and the field curvature in the tangential direction to which weights having different ratios are applied may be employed. In addition, as an extreme example, only any one of the field curvature in the sagittal direction and the field curvature in the tangential direction may be used.

**Claims**

1. An imaging optical system disposed in a front end portion of an insertion section of an endoscope,
   wherein
   when a position on which light from an object distance is focused by the imaging optical system is defined as an imaging position, and the farthest limit and the nearest limit of depth of field in the imaging optical system are defined as a far point and a near point, respectively, the imaging optical system satisfies conditional expression (1):

$$-1.5 \leq \frac{(Tf + Sf)/2 - Zf}{(Tn + Sn)/2 - Zn} \leq 0.0 \qquad (1)$$

   wherein

   Zf represents a spherical aberration of a ray transmitted through 70% of a pupil diameter at the imaging position at a time when an object is disposed at the far point,
   Sf represents a field curvature in a sagittal direction at 80% of a maximum image height at the imaging position at the time when the object is disposed at the far point,
   Tf represents a field curvature in a tangential direction at 80% of the maximum image height at the imaging position at the time when the object is disposed at the far point,
   Zn represents a spherical aberration of a ray transmitted through 70% of a pupil diameter at the imaging position at a time when the object is disposed at the near point,
   Sn represents a field curvature in a sagittal direction at 80% of the maximum image height at the imaging position at the time when the object is disposed at the near point, and
   Tf represents a field curvature in a tangential direction at 80% of the maximum image height at the imaging position at the time when the object is disposed at the near point.

2. The imaging optical system according to claim 1, which does not include a focus adjustment mechanism for focusing responsive to change of the object distance.

3. An endoscope imaging apparatus comprising:

   an imaging optical system according to claim 1; and
   an imaging device that converts an image formed by the imaging optical system into an electric signal for displaying the image on a display device,
   wherein
   the least circle of confusion diameter δ at a time when an image on the display device is observed satisfies 2V/240 ≤ δ ≤ 2V/160, wherein V represents a size at the imaging position of an image displayed in a vertical direction on the display device, and
   when a depth of focus d on an image side of the imaging optical system is defined as d = δ×Fe by the least circle of confusion diameter δ and an effective F number Fe,
   the far point is a conjugate point of a point separated at a distance of the depth of focus d from the imaging position toward the imaging optical system, and
   the near point is a conjugate point of a point separated at a distance of the depth of focus d from the imaging position toward an opposite side to the imaging optical system.

4. An endoscope imaging apparatus comprising:

   an imaging optical system according to claim 2; and

an imaging device that converts an image formed by the imaging optical system into an electric signal for displaying the image on a display device,

wherein

the least circle of confusion diameter $\delta$ at a time when an image on the display device is observed satisfies $2V/240 \leq \delta \leq 2V/160$, wherein V represents a size at the imaging position of an image displayed in a vertical direction on the display device, and

when a depth of focus d on an image side of the imaging optical system is defined as $d = \delta \times Fe$ by the least circle of confusion diameter $\delta$ and an effective F number Fe,

the far point is a conjugate point of a point separated at a distance of the depth of focus d from the imaging position toward the imaging optical system, and

the near point is a conjugate point of a point separated at a distance of the depth of focus d from the imaging position toward an opposite side to the imaging optical system.

# FIG. 1

EP 2 042 908 A2

## FIG. 2

SET OBJECT POSITION

-0.05mm  0.05mm
SPHERICAL ABERRATION
DIAGRAM

—— SAGITTAL
---- TANGENTIAL

-0.05mm  0.05mm
ASTIGMATISM DIAGRAM

0.8
0.7

-0.05mm  0.05mm
DIAGRAM FOR COMPARING
BOTH OF THEM

NEAR POINT

$\dfrac{Tn+Sn}{2}$

$Zn$

-0.05mm  0.05mm
SPHERICAL ABERRATION
DIAGRAM

—— SAGITTAL
---- TANGENTIAL

-0.05mm  0.05mm
ASTIGMATISM DIAGRAM

$\dfrac{Tn+Sn}{2} - Zn$

0.8
0.7

-0.05mm  0.05mm
DIAGRAM FOR COMPARING
BOTH OF THEM

FAR POINT

$\dfrac{Tf+Sf}{2}$

$Zf$

-0.05mm  0.05mm
SPHERICAL ABERRATION
DIAGRAM

—— SAGITTAL
---- TANGENTIAL

-0.05mm  0.05mm
ASTIGMATISM DIAGRAM

$\dfrac{Tf+Sf}{2} - Zf$

0.8
0.7

-0.05mm  0.05mm
DIAGRAM FOR COMPARING
BOTH OF THEM

24

# FIG. 3

3

104

*FIG. 4*

## FIG. 5

110

9

2    7    8

10

## FIG. 6

EXAMPLE 1

L1    L2    St    L3    L4    L5         PP              CG

D2                      D4  D5    D7          D10

Z    D1    D3         D6    D8    D9    D11    D12    P

R1  R2  R3    R4    R6    R7  R8    R9  R10

R11                              R12  R13

## FIG. 7

<u>EXAMPLE 2</u>

## FIG. 8

<u>EXAMPLE 3</u>

## FIG. 9

EXAMPLE 4

## FIG. 10

EXAMPLE 5

## FIG. 11

EXAMPLE 6

## FIG. 12

EXAMPLE 7

# FIG. 13

EXAMPLE 1-1
OBJECT DISTANCE 10 mm
FNo.=6.64

ω=67.4°

SAGITTAL
TANGENTIAL

-0.05mm 0.05mm
SPHERICAL ABERRATION

-0.05mm 0.05mm
ASTIGMATISM

ω=67.4°

-50% 50%
DISTORTION

OBJECT DISTANCE 5.62 mm
FNo.=6.76

ω=65.2°

SAGITTAL
TANGENTIAL

-0.05mm 0.05mm
SPHERICAL ABERRATION

-0.05mm 0.05mm
ASTIGMATISM

ω=65.2°

-50% 50%
DISTORTION

OBJECT DISTANCE 36.7 mm
FNo.=6.52

ω=69.8°

SAGITTAL
TANGENTIAL

-0.05mm 0.05mm
SPHERICAL ABERRATION

-0.05mm 0.05mm
ASTIGMATISM

ω=69.8°

-50% 50%
DISTORTION

## FIG. 14

EXAMPLE 2-1
OBJECT DISTANCE 8.0 mm
FNo.=6.62

ω=65.5°

ω=65.5°

—— SAGITTAL
---- TANGENTIAL

-0.05mm  0.05mm
SPHERICAL ABERRATION

-0.05mm  0.05mm
ASTIGMATISM

-50%  50%
DISTORTION

OBJECT DISTANCE 3.29 mm
FNo.=6.76

ω=63.3°

ω=63.3°

—— SAGITTAL
---- TANGENTIAL

-0.05mm  0.05mm
SPHERICAL ABERRATION

-0.05mm  0.05mm
ASTIGMATISM

-50%  50%
DISTORTION

OBJECT DISTANCE ∞
FNo.=6.50

ω=67.6°

ω=67.6°

—— SAGITTAL
---- TANGENTIAL

-0.05mm  0.05mm
SPHERICAL ABERRATION

-0.05mm  0.05mm
ASTIGMATISM

-50%  50%
DISTORTION

## FIG. 15

EXAMPLE 3-1
OBJECT DISTANCE 10 mm
FNo.=5.18

ω=67.4°

ω=67.4°

—— SAGITTAL
---- TANGENTIAL

-0.05mm 0.05mm
SPHERICAL ABERRATION

-0.05mm 0.05mm
ASTIGMATISM

-50% 50%
DISTORTION

OBJECT DISTANCE 5.64 mm
FNo.=5.24

ω=66.1°

ω=66.1°

—— SAGITTAL
---- TANGENTIAL

-0.05mm 0.05mm
SPHERICAL ABERRATION

-0.05mm 0.05mm
ASTIGMATISM

-50% 50%
DISTORTION

OBJECT DISTANCE 36.3 mm
FNo.=5.11

ω=68.8°

ω=68.8°

—— SAGITTAL
---- TANGENTIAL

-0.05mm 0.05mm
SPHERICAL ABERRATION

-0.05mm 0.05mm
ASTIGMATISM

-50% 50%
DISTORTION

## FIG. 16

EXAMPLE 4-1
OBJECT DISTANCE 10 mm
FNo.=4.81

ω=68.5°

ω=68.5°

—— SAGITTAL
---- TANGENTIAL

-0.05mm 0.05mm
SPHERICAL ABERRATION

-0.05mm 0.05mm
ASTIGMATISM

-50% 50%
DISTORTION

OBJECT DISTANCE 4.79 mm
FNo.=4.85

ω=67.5°

ω=67.5°

—— SAGITTAL
---- TANGENTIAL

-0.05mm 0.05mm
SPHERICAL ABERRATION

-0.05mm 0.05mm
ASTIGMATISM

-50% 50%
DISTORTION

OBJECT DISTANCE 413 mm
FNo.=4.77

ω=69.6°

ω=69.6°

—— SAGITTAL
---- TANGENTIAL

-0.05mm 0.05mm
SPHERICAL ABERRATION

-0.05mm 0.05mm
ASTIGMATISM

-50% 50%
DISTORTION

## FIG. 17

EXAMPLE 5-1
OBJECT DISTANCE 10 mm

FNo.=5.17

-0.05mm  0.05mm
SPHERICAL ABERRATION

ω=67.4°

—— SAGITTAL
---- TANGENTIAL

-0.05mm  0.05mm
ASTIGMATISM

ω=67.4°

-50%    50%
DISTORTION

OBJECT DISTANCE 5.57 mm

FNo.=5.23

-0.05mm  0.05mm
SPHERICAL ABERRATION

ω=66.1°

—— SAGITTAL
---- TANGENTIAL

-0.05mm  0.05mm
ASTIGMATISM

ω=66.1°

-50%    50%
DISTORTION

OBJECT DISTANCE 38.5 mm

FNo.=5.11

-0.05mm  0.05mm
SPHERICAL ABERRATION

ω=68.8°

—— SAGITTAL
---- TANGENTIAL

-0.05mm  0.05mm
ASTIGMATISM

ω=68.8°

-50%    50%
DISTORTION

## FIG. 18

EXAMPLE 6-1
OBJECT DISTANCE 8 mm
FNo.=4.70

-0.05mm  0.05mm
SPHERICAL ABERRATION

ω=68.9°

—— SAGITTAL
---- TANGENTIAL

-0.05mm  0.05mm
ASTIGMATISM

ω=68.9°

-50%  50%
DISTORTION

OBJECT DISTANCE 3.35 mm
FNo.=4.75

-0.05mm  0.05mm
SPHERICAL ABERRATION

ω=67.5°

—— SAGITTAL
---- TANGENTIAL

-0.05mm  0.05mm
ASTIGMATISM

ω=67.5°

-50%  50%
DISTORTION

OBJECT DISTANCE ∞
FNo.=4.65

-0.05mm  0.05mm
SPHERICAL ABERRATION

ω=70.2°

—— SAGITTAL
---- TANGENTIAL

-0.05mm  0.05mm
ASTIGMATISM

ω=70.2°

-50%  50%
DISTORTION

## FIG. 19

EXAMPLE 7-1
OBJECT DISTANCE 7 mm
FNo.=4.43

ω=62.3°

ω=62.3°

—— SAGITTAL
---- TANGENTIAL

-0.05mm  0.05mm
SPHERICAL ABERRATION

-0.05mm  0.05mm
ASTIGMATISM

-50%  50%
DISTORTION

OBJECT DISTANCE 3.44 mm
FNo.=5.06

ω=61.8°

ω=61.8°

—— SAGITTAL
---- TANGENTIAL

-0.05mm  0.05mm
SPHERICAL ABERRATION

-0.05mm  0.05mm
ASTIGMATISM

-50%  50%
DISTORTION

OBJECT DISTANCE 90.1 mm
FNo.=5.01

ω=62.9°

ω=62.9°

—— SAGITTAL
---- TANGENTIAL

-0.05mm  0.05mm
SPHERICAL ABERRATION

-0.05mm  0.05mm
ASTIGMATISM

-50%  50%
DISTORTION

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007251111 A
- JP 2001194580 A

- US 6400514 B